# EUROPEAN PATENT SPECIFICATION

(11) **EP 1 289 376 B1**
(45) Date of publication and mention of the grant of the patent: **28.11.2007**
(21) Application number: 01940862.4
(22) Date of filing: 01.06.2001
(51) Int. Cl.: A23C 9/15, A23C 13/16, A23D 7/00

(54) **SPREADS WITH VIABLE BACTERIAL CULTURE AND PREPARATION THEREOF**
LEBENDE BAKTERIEN ENTHALTENDE BROTAUFSTRICHE UND VERFAHREN ZU DEREN HERSTELLUNG
PATES A TARTINER A CULTURE BACTERIENNE VIABLE ET LEUR PREPARATION

(30) Priority: 01.06.2000 HU 0002098
(43) Date of publication of application: 12.03.2003
(73) Proprietor: Hungarian Dairy Research Institute Ltd., 9200 Mosonmagyarovar (HU)
(72) Inventor: SCHÄFFER, Béla, H-7623 Pécs (HU); SZAKALY, Sándor, H-7621 Pécs (HU); SZILY, Béla, H-7623 Pécs (HU); ZSINKO, Magdolna, H-7636 Pécs (HU)
(74) Representative: Svingor, Adam
(86) International application number: PCT/HU2001/000064
(87) International publication number: WO 2001/091569

(56) References cited:
- EP-A- 0 545 489
- WO-A-00/36930
- WO-A-99/07232
- WO-A-99/51105
- DE-A- 2 300 663
- DE-A- 3 324 821
- DE-C- 964 652
- US-A- 5 846 592

## Description

The invention relates to live flora, low energy spreads, with a probiotic effect if desired, and production thereof. Spreads of this type can be flavoured; i.e. can be plain, slightly salted, spiced or sweet.

The high (at least 80%) fat content fat products spreadable on bread (butter and margarine) have recently been replaced by spreads, which have the characteristic of being well spreadable if cold (just taken out of the refrigerator), and most of them are mixtures of different vegetable or animal fats. Considering their production technologies they may be prepared in either water-in-fat or fat-in-water emulsion forms, or a combination of these. All three types of spreads, and their production processes are known in the art. Information in this regard may be found in the pertinent literature. For their presentation we will group these spreads according to their main types in the following sections.

### Fat-in-water emulsion structure spreads

In the patent US 4 370 125, a cream with 40% fat content is to be mixed with sodium alginate, sodium tetrapyrophosphate, sodium citrate and potassium sorbate at 50 °C, then monoglycerides are added at 70 °C, and the emulsion is homogenized through a two speed homogenizer so that it contains 2-3 µm fat globules, then it is heat treated at 95 °C for 30 seconds. The product, cooled down to 10 °C, is packed and left to settle for 36 hours at 2-4 °C.

According to patent US 4 515 825, the 3.5-5.5 pH, 30-50% fat content emulsion is heat treated at 90 °C for 30 minutes.

According to patent US 4 772 483, cream is enriched by slim milk powder, then salt, locust bean gum, lecithin, mono- and diglycerides and sodium sorbate are added, the pH of the mixture decreased with citric acid, then it is heat treated at 180-185°F for 15 minutes or at 185-190°F for 20-30 seconds, and then is homogenized and packaged warm.

According to the specification of CS 193 670, the homogenized, acidified cream is post-heat treated at 65-80 °C with added stabilizers, then is homogenized again and packaged warm.

### Water-in-fat emulsion structure spreads

According to the specification of EP 0 365 738, water-in-fat emulsion structured, low fat-content spreads are produced by mixing a low pH water phase containing water, gelatine, salt, lactic acid and milk dry-products, and a milk-fat phase containing monoglycerides and colouring agents, then the mixture is driven by a volumetric displacement pump through a piped heat exchanger with scrapers, in which the fat is crystallized and the mixture becomes an emulsion.

According to international publication WO 91/07098, spreads are produced in the traditional Fritz-type butter-making machine by adding water phase containing milk protein to the churned, 80-83% fat-content butter lumps at 15-25 °C before working, then working them together.

According to patent US 5 075 125, 30-50% milk-fat, 50-65% water and distilled monoglyceride, or mono- and diglyceride content spreads are produced through mechanical emulsification.

According to the specification of PE 0 368 805, spreads below 60% fat-content are produced by emulsification of two types of water phases in the butter with the help of a mixer capable of great shear force. The first water phase is a buffer containing lactic acid; the second water phase is a milk protein suspension.

According to international publication WO 94/05160, 40-80% fat-content cream is mixed with water phase containing a fixed amount of stabilizers and salt at 50-80 °C, during which the cream becomes a water-in-fat emulsion. The product is cooled in multiple steps, and a stable water-in-fat emulsion structure is achieved by having a part of the product driven back to the beginning of the process after the first cooling step.

### Water-in-fat / fat-in-water mixed emulsion structure spreads

According to patent specification HU 187 066, cream is homogenized in two steps, then is fermented with lactic acid bacteria until reaching 4.2-4.7 pH. The sour coagulum is mixed with butter, then, with the addition of texture modifier hydrocolloids, is post-heat treated at 65-80 °C. The fat component of the butter-cream produced by this method is a fat-in-water emulsion containing 70-80% fat globules of an average diameter below 0.5 µm.

According to patent US 4 769 255, a mixed emulsion spread may be produced in which the ratio of fat-in-water to water-in-fat emulsions ranges between 7:3 and 8:2.

From the analysis of the prior art technologies it is evident that while water-in-fat emulsion structure spreads are almost exclusively prepared through cold processes (crystallization-working), in the production of fat-in-water structure products post-heat treatment is applied in all cases, and in the case of mixed emulsions the technology depends on which type of emulsion is dominant.

Recent medical research has shown that the resorption of fat is better if it is consumed in the form of a higher dispersion level fat-in-water emulsion. Moreover, the role of live flora (living or viable culture) has recently gained an increasing amount of attention in nutrition, especially when the live flora has a probiotic effect.

These two factors together require the production of spreads which, in addition to their high dispersion level fat components, contain live flora.

Live flora spreads of the invention are high dispersion level fat-in-water emulsion structure spreads. In the prior art, in the case of these spreads the spreadability - as may be observed from the presentation of the technologies - is achieved by the special homogenization of basic materials, by adding hydrocolloids before post-heat treatment, then by post-heat treating. As an effect of this post-heat treatment, used for texture modification in each case besides pasteurization, the microorganisms are liquidated when fat-in-water emulsion structure butter-creams are produced; that is, the live flora is inactivated by the know production technique, the problem of retaining it in the product being as yet unresolved.

It is evident from the above that the traditionally used combination of procedures in butter-cream production (that is heat treatment, homogenization, fermentation, stabilizer addition, and post-heat treatment to assure the spreadability of products with roughly 40% fat content) does not make possible the production of live flora butter-creams due to the bacterium killing effect of post-heat treatment.

The addition of stabilizers before heat treatment and homogenization, and fermentation as a final step following stabilization, heat treatment and homogenization, is applied only for yoghurts. However, in this way only a pudding-like, spoonable texture can be achieved.

According to the state of art there are no known methods for the production of fat-in-water emulsion structure butter based products, in which spreadability could be achieved without post-heat treatment.

Given the above, the object of the invention is to create butter-creams, and to provide processes two produce them, such that they should contain live flora with probiotic effects along with a high dispersion level fat content.

Unexpectedly the inventors realized that by a special combination of stabilization, homogenization and fermentation spreadable butter-cream can be produced without post-heat treatment, which is practically stable in the usual range of temperature (0-30 °C).

In particular, the inventors found that (instead of adding stabilizers in the final phase and achieving the required texture via post-heat treatment, as traditional), if the base material cream is stabilized with water binding hydrocolloids which are capable of keeping this property even after heat treatment and homogenization, and then the further processes like heat treatment, homogenization, flavouring and fermentation are carried out afterwards, the appropriate texture can be achieved without post-heat treatment and thus without destruction of the live flora.

With the above technique e.g.. a fat-in-water emulsion structured spread of the known quality, nevertheless comprising live flora, can be produced, said spread (butter-cream) having fat-globules with an average diameter of ≤ 1.0 µm, preferably ≤ 0.5, µm containing, preferably probiotic, live flora. Preferably, the product has further significant properties (the amount of components based on 100g of the final praduct):

| | |
|---|---|
| Milk fat content, g/100g: | 28-42, preferably 38-42 |
| Fat-free dry material content, g/100g: | 5-12, preferably 9-11 |
| Protein content, g/100g: | 2-5, preferably 3-4 |
| Energy content, kJ/100g: | 900-1600; preferably 1200-1500 |
| Type of emulsion: | 100% fat-in-water |
| Average diameter of fat globules, µm: | ≤ 1.0 |
| Lactic acid bacteria content, CFU*/g: | ≥ 10⁶ |

| | |
|---|---|
| *CFU = colony forming unit | |

The properties listed are for the plain, unflavoured products. For flavoured products the figures vary in accordance with the amount and characteristics of the flavouring materials.

The invention further relates to the use of a water binding hydrocolloid which is capable of keeping its water binding property after heat treatment and homogenization, for the preparation of a live flora spread, preferably a fat-in-water emulsion structure spread.

According to the invention to the 29-44 mass%, preferably 38-42 mass% fat-content cream, calculate against the final mass of the product, 0.2-1.5 mass%, preferably 0.4-1.0 mass% water binding hydrocolloid (syneresis blocking) materials, or their mixtures, preferably gelatine and/or modified starch, are dispersed, said hydrocolloid keeping its water binding property even after homogenization and heat-treatment. If desired, the spreadability features of the butter may be improved by increasing the amount of the fat-free dry milk material by a maximum of 5 mass%, preferably 1-5 mass%; that is, by adding a lactic additive enriched by milk proteins, preferably milk-powder and/or milk protein concentrated powder in an amount corresponding to 1-5 mass% increase of dry-material, calculated against the mass of the final product. Given the nearly 100% dry-material content of these materials, their added amount calculated against the mass of the final product will be nearly 1-5 mass%. The cream then is heat treated, as traditional, at 75-110°C, preferably at 85-95 °C, then homogenized so that the average diameter of fat globules in the emulsion phase is 1.0 µm.

Heat treatment and homogenization is usually carried out as follows:
a.) the cream is homogenized in one step at the temperature of the heat treatment under 20-35 MPa, preferably 25-30 MPa pressure, or
b.) the cream is heat treated, cooled to the temperature of inoculation, and then homogenized in one step at this temperature under 20-35 MPa, preferably 25-30 MPa pressure, or
c.) the cream is homogenized under 2-10 MPa, preferably 4-6 MPa pressure at 60-110°C, preferably at 85-95°C as a first step, then is cooled to the temperature of inoculation, and finally at this temperature is homogenized under 25-35 MPa, preferably 22-28 MPa pressure as a second step.

In method b) and c) of the homogenization processes above, it is preferable to use traditional pasteur lines (for example plate pasteur), while in method a) preferably a scraped surface, piped heat exchanger is used for the cooling of the cream, with regard to the high viscosity of the cream.

Homogenized cream cooled to the inoculation temperature is inoculated with a lactic acid bacteria culture (1-5 mass%) by the usual method. The applied lactic acid bacteria culture is a type of acidifier culture used in the dairy industry, preferably butter-culture. Inoculation in cases b) and c) above may take place before or after homogenization. The inoculation and the following fermentation temperature depends on the growth temperature of the bacterial culture used, averaging between 20 and 45 °C. If the culture consists of one or more probiotic strains, then the produced butter-cream will have a probiotic effect. The inoculated cream is placed into its package (preferably a plastic box), sealed airtight (preferably by CO₂ gas protection), then fermented at the growth temperature of the bacteria until it reaches a pH of 4.2-4.7, preferably 4.5-4.6. The fermented, live flora butter-cream is cooled to 0-10 °C and is stored at this temperature.

The butter-cream produced this way is well spreadable in the 0-30 °C temperature range, consists of ≤ 1.0 µm fat globules, and contains lactic add bacteria, preferably in an amount of at least 10³/g, more preferably 10³-10⁹/g, even more preferably 1x10⁶ - 3x10⁸/g. The bacteria, depending on the culture employed, may have a probiotic effect.

Spiced or sweetened variations of the live flora butter-creams can be produced if, following homogenization, the flavouring materials are added to the cream, then the flavored product is packaged and fermented.

Spreads of the invention combines two nutrition advantages: on the one hand 100% of its fat content is in emulsion form of high dispersity level (d≤1.0 µm), on the other hand the product contains a large amount or lactic acid bacteria, preferably more than one million per gram. Depending on the bacterial culture used, the product may also be of probiotic effect.

The process presented via the following examples in more detail, without any intention of limitation.

### Example 1

Plain, live flora butter-cream was produced. As basic material 42 mass% fat-content milk is used, in which 1.0 mass% gelatine is dispersed. The cream is heated to 90 °C, then is homogenized without cooling under 35 MPa pressure. The heat treated, homogenized cream is cooled to 24 °C with a piped heat exchanger with scrapers, then inoculated with 2 mass% butter culture (VK-57 brand culture, manufacturer and distributor: Hungarian Dairy Research Institute, Mosonmagyaróvár), packaged into plastic boxes, and fermented until reaching a pH of 4.5 (about 12 hours). Following this process the product is cooled to 5 °C, then stored at 0-5 °C.

The fat content of the butter-cream produced this way is 40.7 mass%, its fat-free dry-material content is 5.7 mass%, its protein content is 3 mass%, the average diameter of its fat globules is 0.6 µm, and following production the butter-cream contains 10⁸/g lactic acid bacteria.

### Example 2

Plain live flora butter-cream was produced by a process similar to that of Example 1, but with the difference that the base material cream is enriched with a 2 mass% milk-powder, and a modified starch is used instead of gelatine, and the cream is heat treated on plate pasteur at 105 °C for 40 seconds, then cooled to 24 °C, and then, following inoculation, is homogenized at 24 °C under 35 MPa pressure.

The fat content of the butter-cream produced this way is 40.0 mass%, its fat-free dry-material content is 7.7 mass%, its protein content is 2.7 mass%, the average diameter of its fat globules is 0.5 µm, and following production it contains 2x10⁸/g lactic acid bacteria.

### Example 3

Plain live flora butter-cream was produced with a process similar to that of Example 2, but with the difference that 35 mass% fat-content base material cream was used, which was enriched with a 3 mass% milk-powder, and stabilized with 1% 50-50% gelatine/modifed starch mixture. During production it was taken out of the plate pasteur at 70 °C, homogenized under 5 MPa pressure, then returned and cooled to 24 °C, and then following inoculation was homogenized at 24 °C under 25 MPa pressure.

The fat content of the butter-cream produced in this way is 33 mass%, its fat-free dry-material content is 9.4 mass%, its protein content is 4 mass%, the average diameter of its fat globules is 0.4 µm, and following production the butter-cream contains 4x10⁸/g lactic acid bacteria.

### Example 4

Spiced (Hungarian style) live flora butter-cream was produced with a process similar to that of Example 1, but with the difference that following heat treatment and homogenization 1 mass% salt, 1 mass% paprika, 0.8 mass% ground caraway and 0.2 mass% ground black pepper was added to the cream.

The fat content of the butter-cream produced in this way is 39.5 mass%, its fat-free dry-material content is 10.5 mass%, and its protein content is 2.9 mass%.

### Example 5

Lemon flavoured live flora butter-cream was produced with a process similar to that of Example 3, but with the difference that following inoculation and cold homogenization 8 mass% sugar and 5 mass% lemon juice was added to the cream.

The fat content of the butter-cream produced in this way is 28.7 mass%, its fat-free dry material content is 18.6 mass%, and its protein content is 3.5 mass%.

### Example 6

Probiotic effect butter-cream was produced with a process similar to any of Examples 1-5, but with the difference that for inoculation a thermophile probiotic culture is used, namely Probiolact 3 brand probiotic culture (manufacturer and distributor: Hungarian Dairy Research Institute, Mosonmagyaróvár), and inoculation and fermentation was carried out at 37 °C.

The butter-cream produced this way will be of probiotic effect.

## Claims

1. A fat-in-water emulsion structured live flora spread obtainable by the process according to claim 8, comprising fat globules of up to 1 µm average diameter, a water binding hydrocolloid, and live lactic-acid bacteria.

2. The live flora spread according to claim 1, with live lactic acid bacteria numbering 10³ to 10⁹/g, preferably 1x10⁶ to 3x10⁸/g.

3. The live flora spread according to claim 1 or 2 containing gelatine and/or modified starch as a water binding hydrocolloid.

4. The live flora spread according to any of claims 1 to 3 having a milk-fat content of 28-42 g/100g, a fat-free dry-material content of 5-12 g/100g, a protein content of 2-5 g/100g and an energy content of 900-1600 kJ/100g.

5. The live flora spread according to any of claims 1 to 3 having a milk-fat content of 38-42 g/100g, a fat-free dry-material content of 9-11 g/100g, a protein content of 3-4 g/100g and an energy content of 1200-1500 kJ/100g.

6. The live flora spread according to any of claims 1 to 5, wherein said butter-cream is probiotic and/or flavoured

7. Use of gelatine and/or modified starch for the preparation of a fat-in-water emulsion system live flora read obtainable by the process according to claim 8 comprising a live bacterial culture.

8. A process for the preparation of a fat-in-water emulsion structured spread with live bacterial culture,
***comprising the steps of***
- dispersing, in a 29-44 mass% fat content cream, a water binding hydrocolloid of 0.2-1.5 mass% calculated against the mass of the final product, said hydrocolloid keeping its water binding property after heat treatment and homogenization,
- heat treating
- homogenization in at least one step wherein at least one homogenization step is carried out under a pressure of 20 to 35 MPa,
- following the heat treatment, before or after homogenization at 20 to 35 MPa, inoculating said mixture with a lactic acid bacteria culture,
- after inoculation fermenting the mixture, preferably in the consumer package, at the temperature of the culture growth, and
- cooling the mixture to 0-10 °C.

9. The process according to claim 8, wherein
- the starting cream comprises 38-42 mass% fat content,
- the water binding hydrocolloid is of 0.4-1.0 mass%, calculated against the mass of the final product, said hydrocolloid being preferably gelatine or modified starch or the mixture of gelatine and modified starch,
- in the fermenting step the lactic acid bacteria culture is fermented to pH = 4.2-4.7,
- preferably the lactic acid bacteria culture is of probiotic effect,
and, if desired, further additive(s) is(are) used,
preferably
- a milk-based additive equalling a dry-material content up to 5 mass% calculated against the mass of the final product, said additive comprising preferably milk-powder and/or milk protein concentrate, and/or
- flavouring material/s/

10. The process according to claims 8 or 9, wherein upon heat treatment and homogenization:
a.) the cream is homogenized in one step at the temperature of the heat treatment under 20-35 MPa, preferably 25-30 MPa pressure, or
b.) the cream is heat treated, cooled to the temperature of inoculation, and is homogenized in one step at this temperature under 20-35 MPa, preferably 25-30 MPa pressure, or
c.) the cream is homogenized under 2-10 MPa, preferably 4-6 MPa pressure at 60-110 °C, preferably at 85-95 °C in a first step, then is cooled to the temperature of inoculation, and then at this temperature is homogenized under 25-35 MPa or 22-28 MPa pressure as a second step.

11. The process according to any of claims 8-10, wherein a probiotic inoculation material is used.

12. The process according to any of claims 8 to 11, wherein the spread comprises fat globules of up to 1 µm average diameter.

## Patentansprüche

1. Brotaufstrich mit Lebendflora und der Struktur einer Fett-in-Wasser-Emulsion, enthaltend Fettkügelchen eines durchschnittlichen Durchmessers von höchstens 1 µm, ein wasserbindendes Hydrokolloid und lebende Milchsäure-bakterien, der mit dem Verfahren nach Anspruch 8 herstellbar ist.

2. Brotaufstrich mit Lebendflora nach Anspruch 1, enthaltend 10³-10⁹/g, vorzugsweise 1x10⁶-3x10⁸/g, lebende Milchsäurebakterien.

3. Brotaufstrich mit Lebendflora nach Anspruch 1 oder 2, enthaltend als wasserbindendes Hydrokolloid Gelatine und/oder modifizierte Stärke.

4. Brotaufstrich mit Lebendflora nach einem der Ansprüche 1-3, enthaltend 28-42 g/100g Milchfett, 5-12 g/100g fettfreie Trockensubstanz, 2-5 g/100g Protein und 900-1600 kJ/100g Energie.

5. Brotaufstrich mit Lebendflora nach einem der Ansprüche 1-3, enthaltend 38-42 g/100g Milchfett, 9-11 g/100g fettfreie Trockensubstanz, 3-4 g/100g Protein und 1200-1500 kJ/100g Energie.

6. Brotaufstrich mit Lebendflora nach einem der Ansprüche 1-5, welche butterähnlicher Brotaufstrich probiotische Wirkung hat und/oder mit Geschmacksstoffen versehen ist.

7. Verwendung von Gelatine und/oder modifizierter Stärke zur Herstellung eines Brotaufstriches mit Lebendflora und der Struktur einer Fett-in-Wasser-Emulsion, der mit dem Verfahren nach Anspruch 8 herstellbar ist.

8. Verfahren zur Herstellung eines Brotaufstriches mit Lebendflora und der Struktur einer Fett-in-Wasser-Emulsion, ***dadurch gekennzeichnet,* dass** man
- in 29-44 Masse% Fett enthaltender Sahne auf die Masse des Endproduktes bezogen 0,2-1,5 Masse% eines wasserbindenden Hydrokolloids dispergiert, das seine wasserbindenden Eigenschaften nach einer Wärmebehandlung und Homogenisation beibehält, dann eine
- Wärmebehandlung und danach eine
- Homogenisierung vornimmt, bei welcher wenigstens ein Homogenisierungschritt unter einem Druck von 20-35 MPa erfolgt,
- nach der Wärmebehandlung, vor oder nach der Homogenisierung bei 20-35 MPa das Gemisch mit einer Milchsäurebakterienkultur inokuliert,
- nach der Inokulation die Kultur, vorzugsweise in der Verbraucherverpackung, bei der Wachstumstemperatur der Kultur fermentiert, und
- das Gemisch auf 0-10 °C kühlt.

9. Verfahren nach Anspruch 8, ***dadurch gekennzeichnet*, dass**
- die als Ausgangsmaterial verwendete Sahne 38-42 Masse% Fett enthält,
- die Menge des wasserbindenden Hydrokolloids, vorzugsweise Gelatine oder modifizierte Stärke oder ein Gemisch aus Gelatine und modifizierter Stärke, bezogen auf die Masse des Endproduktes 0,4-1,0 Masse% beträgt,
- im Fermentationsschritt die Milchsäurebakterienkultur bis pH 4,2-4,7 fermentiert wird,
- die Milchsäurebakterienkultur vorzugsweise eine probiotische Wirkung hat,
und gewünschtenfalls weiterer Zusatz oder weitere Zusätze verwendet wird/werden, vorzugsweise
- Zusatz auf Milchbasis, deren Trockengehalt bis zu 5 Masse% des Endproduktes ausmacht, wobei dieser Zusatz vorzugsweise Milchpulver und/oder Milchproteinkonzentrat enthält, und/oder
- Geschmacksstoff(e).

10. Verfahren nach Anspruch 8 oder 9, ***dadurch gekennzeichnet,* dass** im Zuge der Wärmebehandlung und Homogenisation
a) die Sahne bei der Temperatur der Wärmebehandlung unter 20-35 MPa, vorzugsweise 25-30 MPa, Druck in einem Schritt homogenisiert wird oder
b) die Sahne wärmebehandelt, dann auf die Temperatur der Inokulation gekühlt und anschließend bei dieser Temperatur unter 20-35 MPa, vorzugsweise 25-30 MPa, Druck in einem Schritt homogenisiert wird oder
c) die Sahne in einem ersten Schritt bei 60-110 °C, insbesondere bei 85-95 °C, unter 2-10 MPa, vorzugsweise 4-6 MPa, Druck homogenisiert, dann auf die Temperatur der Inokulation gekühlt und schließlich in einem zweiten Schritt bei dieser Temperatur und 25-35 MPa, insbesondere 22-28 MPa, Druck homogenisiert wird.

11. Verfahren nach einem der Ansprüche 8-10, ***dadurch gekennzeichnet,* dass** probiotisches Inokulationsmaterial verwendet wird.

12. Verfahren nach einem der Ansprüche 8-11, ***dadurch gekennzeichnet,* dass** der Brotaufstrich Fettkügelchen eines mittleren Durchmessers von höchstens 1 µm enthält.

## Revendications

1. Pâte à tartiner à flore vivante, constituant un système émulsion huile dans l'eau, obtenable par le procédé selon la revendication 8, comprenant de globules gras de diamètre moyen égal ou inférieur à 1 micromètre, un hydrocolloïde liant l'eau et des bactéries lactiques vivantes.

2. La pâte à tartiner à flore vivante selon la revendication 1 dans laquelle le nombre des bactéries lactiques vivantes est de 10³ à 10⁹/g, préférablement de 1x10⁶ à 3x10⁸/g.

3. La pâte à tartiner à flore vivante selon la revendication 1 ou 2 contenant en tant que hydrocolloïde liant l'eau de la gélatine et/ou de l'amidon modifié.

4. La pâte à tartiner à flore vivante selon l'une quelconque des revendications 1 à 3 ayant une teneur en matière grasse de 28 à 42 g/100g, une teneur en matière sèche non grasse de 5 à 12 g/100g, une teneur en protéine de 2 à 5 g/100g et une teneur en énergie de 900 à 1600 kJ/100g.

5. La pâte à tartiner à flore vivante selon une des revendications 1 à 3 ayant une teneur en matière grasse de 38 à 42 g/100g, une teneur en matière sèche non grasse de 9 à 11 g/100g, une teneur en protéine de 3 à 4 g/100g et une teneur en énergie de 1200 à 1500 kJ/100g.

6. La pâte à tartiner à flore vivante selon une des revendications 1 à 5 laquelle est probiotique et/ou aromatisée.

7. Utilisation de la gélatine et/ou de l'amidon modifié pour la préparation d'une pâte à tartiner à flore vivante à système émulsion huile dans l'eau obtenable par le procédé selon la revendication 8 comprenant une culture bactérienne vivante.

8. Procédé de préparation d'une pâte à tartiner à culture bactérienne vivante, constituant un système émulsion huile dans l'eau,
comprenant les étapes suivantes:
- dispersion de 0,2 à 1,5 % en poids, par rapport au poids total du produit final, d'un hydrocolloïde liant l'eau dans une pâte ayant une teneur en matière grasse de 29 à 44 % en poids, lequel hydrocolloïde conserve sa capacité de lier l'eau aprés le traitement thermique et l'homogénéisation
- traitement thermique,
- homogénéisation en au moins une étape, où au moins une étape d'homogénéisation est effectuée sous une pression de 20 à 35 MPa,
- après le traitement thermique, avant ou après l'homogénéisation à 20 à 35 MPa, inoculation du mélange avec une culture bactérienne lactique,
- après l'inoculation, fermentation du mélange, préférablement dans l'emballage du consommateur, à la température de la croissance de la culture, et
- refroidissement du mélange à une température de 0 à 10 °C.

9. Le procédé selon la revendication 8, dans lequel
- la pâte de base comprend 38 à 42 % en poids de matière grasse,
- la teneur en hydrocolloïde liant l'eau est de 0,4 à 1,0 % en poids, par rapport au poids total du produit final, le hydrocolloïde étant préférablement de la gélatine ou l'amidon modifié ou un mélange de gélatine et d'amidon modifié,
- dans l'étape de fermentation la culture bactérienne lactique est fermentée jusqu'à pH = 4,2 à 4,7,
- préférablement, la culture bactérienne lactique a un effet probiotique,
et si désiré, on utilise d'autre(s) additif(s),
préférablement
- un additif à base de lait complétant la teneur en matière sèche jusqu'à 5 % en poids par rapport au poids total du produit final, où l'additif comprend préférablement de la poudre de lait et/ou de concentrât de protéine de lait, et/ou
- agent(s) aromatisant(s).

10. Le procédé selon la revendication 8 ou 9, dans lequel au cours du traitement thermique et de l'homogénéisation:
a) la pâte est homogénéisée en une étape sous 20 à 35 MPa, préférablement sous 25 à 30 MPa, à la température du traitement thermique, ou bien
b) la pâte est traitée thermiquement, refroidie à la température d'inoculation et homogénéisée à cette température en une étape sous 20 à 35 MPa, préférablement 25 à 30 MPa, ou bien
c) la pâte est homogénéisée dans une première étape sous une pression de 2 à 10 MPa, préférablement 4 à 6 MPa à une température de 60 à 110 °C, préférablement 85 à 95 °C, puis elle est refroidie à la température d'inoculation et homogénéisée dans une deuxième étape à cette température sous une pression de 25 à 35 MPa ou 22 à 28 MPa.

11. Le procédé selon l'une quelconque des revendications 8 à 10, dans lequel une matière probiotique d'inoculation est utilisée.

12. Le procédé selon l'une quelconque des revendications 8 à 11, dans lequel la pâte à tartiner comprend de globules gras ayant un diamètre moyen d'au plus de 1 micromètre.
